# FASCICULE DE BREVET EUROPEEN

(11) **EP 0 665 926 B1**
(45) Date de publication et mention de la délivrance du brevet: **18.12.1996**
(21) Numéro de dépôt: 93921992.9
(22) Date de dépôt: 05.10.1993
(51) Int. Cl.: F16D 65/22, F16D 65/56, F16D 51/22

(54) **FREIN A TAMBOUR A ACTIONNEMENT MECANIQUE**
TROMMELBREMSE MIT MECHANISCHER BETÄTIGUNG
MECHANICALLY OPERATED DRUM BRAKE

(30) Priorité: 30.10.1992 FR 9213048
(43) Date de publication de la demande: 09.08.1995
(73) Titulaire: ALLIEDSIGNAL EUROPE SERVICES TECHNIQUES, 93700 Drancy (FR)
(72) Inventeur: MERY, Jean, Claude, F-93320 Pavillons-sous-Bois (FR); PRESSACO, Pierre, F-93600 Aulnay-sous-Bois (FR)
(86) Numéro de dépôt international: FR9300977
(87) Numéro de publication internationale: WO9410472

(56) Documents cités:
- EP-A- 0 171 222
- EP-A- 0 419 171
- US-A- 3 708 044
- US-A- 3 709 334

## Description

La présente invention concerne les freins à tambour à actionnement mécanique, cette commande mécanique constituant un moyen auxiliaire d'actionnement du frein à tambour qui possède déjà un moteur principal de frein de frein, par exemple hydraulique. Dans ce cas, la commande mécanique peut constituer un frein de parc ou un frein de secours.

De façon connue les freins à tambour comportent une plaque support sur laquelle sont montés coulissants deux segments comportant chacun une âme et une jante dont la face en regard du tambour reçoit une garniture de friction susceptible d'être amenée en engagement de friction contre le tambour par un dispositif d'actionnement hydraulique agissant sur une première extrémité des âmes des segments une entretoise de longueur variable déterminant l'écartement des segments étant disposée au voisinage du dispositif d'actionnement hydraulique, une seconde extrémité des âmes des segments portant sur une pièce d'appui solidaire de la plaque support. Un ressort applique les segments contre l'entretoise lorsque le moteur de frein n'est pas actionné.

Généralement, il est prévu un levier d'actionnement mécanique articulé à l'une de ses extrémités sur l'âme d'un des segments et comportant, en un point intermédiaire proche de cette articulation, une encoche prévue pour coopérer avec l'entretoise de longueur variable et permettre de solliciter en écartement les segments sous l'action d'un câble de manoeuvre accroché à l'autre extrémité du levier.

Une telle disposition des actionneurs hydraulique et mécanique, connue dans la technique sous l'expression "à segments flottants", due au fait de l'absence d'ancrage des âmes des segments sur la pièce d'appui solidaire de la plaque support, impose de disposer pour l'actionneur mécanique d'une force d'actionnement très importante.

On connaît d'autres dispositions de freins à tambour, connues dans la technique sous l'expression "duo servo", qui sont dépourvues de pièce d'appui entre les extrémités des âmes des segments qui sont alors articulés l'une sur l'autre. De tels freins ont une efficacité très élevée, et une stabilité très médiocre et les usures des garnitures de friction sont très déséquilibrées.

On connaît du document EP-A-0 419 171, un frein à tambour combinant les deux dispositions ci-dessus, dans lequel le frein est de conception à segments flottants lorsqu'il est actionné hydrauliquement, et de conception duo-servo lorsqu'il est actionné mécaniquement. Cependant, dans ce frein à tambour les forces d'actionnement mécaniques sont inégalement réparties entre les deux segments, et de plus la course du dispositif de commande mécanique varie selon l'état du frein à tambour.

La présente invention a donc pour but de réaliser un frein à tambour présentant les avantages des deux dispositions rappelées ci-dessus sans présenter les inconvénients de ce système connu.

Ce but est atteint, selon l'invention, avec un dispositif d'actionnement mécanique agissant entre un des segments et une première extrémité d'un dispositif de transmission de force monté coulissant sur l'autre segment, une deuxième extrémité du dispositif de transmission de force portant sur l'entretoise de longueur variable, et le dispositif d'actionnement mécanique est disposé au voisinage de la pièce d'appui entre les secondes extrémités des âmes des segments.

D'autres buts, caractéristiques et avantages ressortiront clairement de la description qui suit d'un mode de réalisation de l'invention donné à titre d'exemple non limitatif, en référence aux dessins annexés sur lesquels :
- La Figure 1 représente une vue de face d'un frein à tambour réalisé conformément à la présente invention ;
- La Figure 2 représente un dispositif de transmission de force utilisé utilisé dans le frein à tambour de la Figure 1 ;
- La Figure 3 représente une variante du dispositif d'actionnement mécanique de la Figure 1 ; et
- La Figure 4 représente une autre variante du dispositif d'actionnement mécanique de la Figure 1.

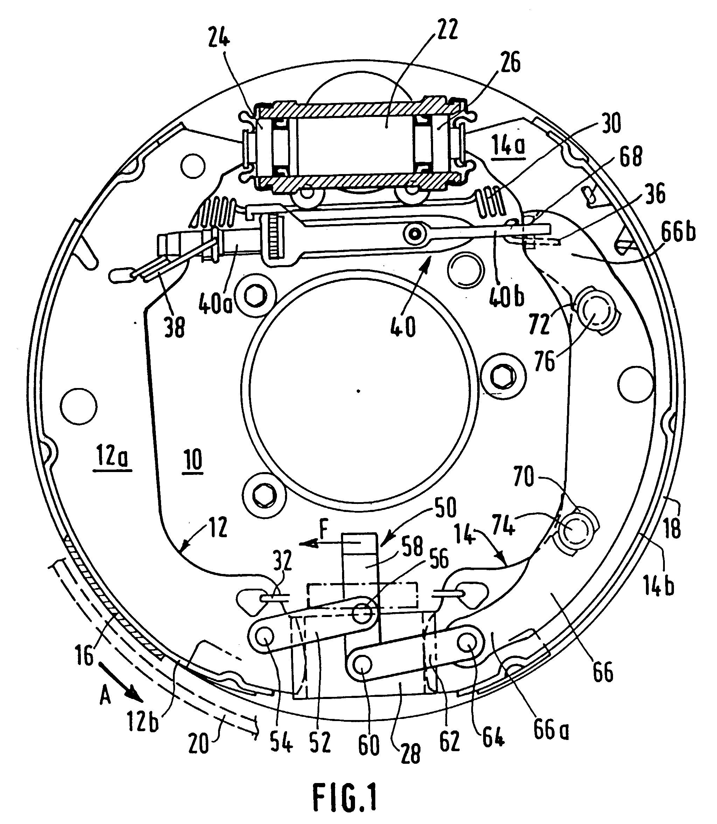

Le frein à tambour représenté sur la Figure 1 comporte une plaque support 10 constituée d'un disque approximativement plan. Cette plaque 10 est prévue pour être assujettie à une partie fixe du véhicule, telle qu'une bride d'essieu (non représenté).

Deux segments de frein 12 et 14 sont supportés de façon coulissante par le disque de la plaque support 10, grâce à des mécanismes habituels (non représentés). De façon bien connue, chacun des segments 12 et 14 comprend une âme 12a, 14a approximativement plane, sur laquelle est fixée une jante 12b, 14b en forme d'arc de cercle supportant sur sa face extérieure une garniture de friction 16 et 18 respectivement.

Les segments 12 et 14 sont placés sur la plaque support 10 de telle sorte que les enveloppes extérieures des garnitures 16 et 18 soient situées sur un même cercle dont l'axe est confondu avec l'axe de la plaque support 10. Ainsi, les garnitures 16 et 18 peuvent venir en contact avec la surface intérieure d'un tambour de frein 20 coiffant les deux segments et représenté partiellement en traits tiretés sur la Figure 1. Le tambour 20 est concentrique avec les garnitures 16 et 18 et il est fixé à une partie tournante telle qu'une roue du véhicule (non représentée).

Un moteur de frein 22, à commande hydraulique, est fixé sur la plaque support 10, entre deux premières extrémités adjacentes des segments 12 et 14. Ce moteur de frein 22 est muni de deux pistons 24 et 26 qui fonctionnent en opposition de façon à exercer une poussée sur l'extrémité correspondante de l'âme 12a, 14a de chacun des segments, lorsque le moteur de frein est actionné.

Un bloc d'appui 28, également fixé sur la plaque support 10, est placé entre les deux autres extrémités adjacentes des segments 12 et 14, de telle sorte que les extrémités correspondantes des âmes 12a et 14a de ces segments soient normalement en appui contre ce bloc.

Un ressort de traction 30 est interposé entre les extrémités des âmes des segments entre lesquelles est placé le moteur de frein 22, à proximité immédiate de ce dernier, pour rapprocher ces extrémités l'une de l'autre lorsque le moteur n'est pas actionné. De façon comparable, le maintien des deux autres extrémités des segments 12 et 14 en appui contre le bloc d'appui 28 est réalisé au moyen d'un ressort de traction 32 interposé entre les extrémités correspondantes des âmes des segments, à proximité immédiate de ce bloc.

En supposant que le tambour de frein 20 tourne dans le sens de la flèche A sur la Figure 1 lorsque le véhicule se déplace en marche avant, les segments 12 et 14 peuvent être distingués par le fait que le segment 12 prend appui sur le bloc d'appui 28 lorsqu'il est en contact de friction avec le tambour, alors que le segment 14 prend appui sur le piston 26 du moteur de frein 22 dans les mêmes conditions. Pour tenir compte de cette différence, les segments 12 et 14 sont appelés respectivement "segment comprimé" et "segment tendu".

Le frein à tambour représenté sur la Figure 1 comprend de plus une entretoise 40 disposée entre les segments 12 et 14, au voisinage du moteur de frein 22, approximativement parallèlement à l'axe de ce dernier.

L'entretoise 40 a une longueur variable et elle est équipée de moyens de réglage automatique permettant d'en accroître de façon connue la longueur au fur et à mesure de l'usure des garnitures de friction 16 et 18.

A cet effet, l'entretoise 40 comprend deux pièces terminales 40a et 40b dans lesquelles sont formées respectivement une échancrure recevant l'âme du segment 12 et une échancrure recevant l'âme du segment 14.

Des décrochements formés au niveau de l'entretoise 40 sur le bord intérieur de l'âme de chacun des segments 12 et 14 permettent de maintenir en place l'entretoise.

Un dispositif d'actionnement mécanique 50 est disposé au niveau du bloc d'appui 28, c'est-à-dire au voisinage des extrémités adjacentes des segments 12 et 14. Dans l'exemple représenté sur la Figure 1, il s'agit d'un dispositif à biellettes, une première biellette 52 étant montée pivotante en 54 sur l'âme 12a du segment 12, et en 56 sur un levier d'actionnement 58, dont une extrémité est prévue pour y accrocher un câble de manoeuvre (non représenté).

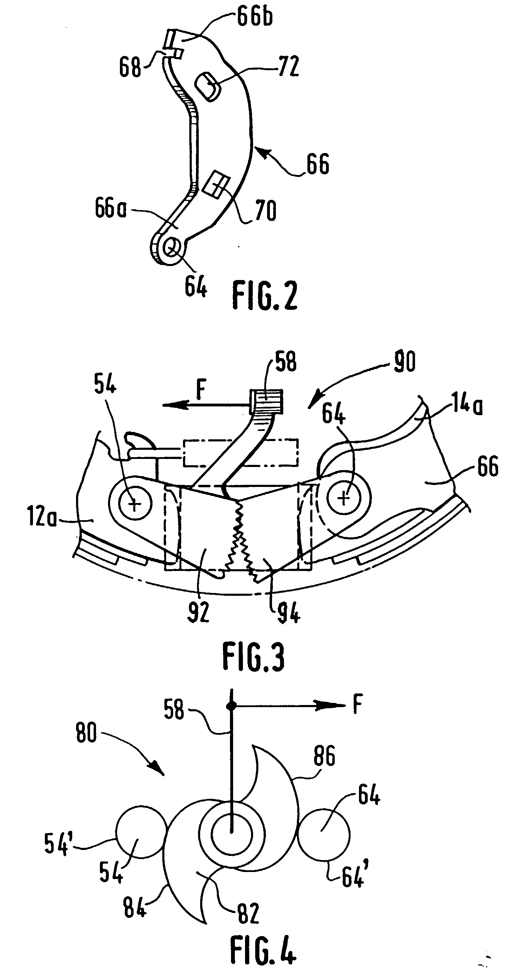

Sur le levier 58 est également montée pivotante en 60 une seconde biellette 62 elle-même pivotante en 64 sur un dispositif de transmission de force 66. Le dispositif 66, représenté seul sur la Figure 2, est formé d'une d'une pièce plate en forme générale de croissant avec des extrémités 66a et 66b arrondies. L'une de ces extrémités 66a est formée avec la liaison pivotante avec la biellette 62, tandis que l'autre extrémité est formée avec une échancrure 68 dans le fond de laquelle est reçue la partie terminale 40b de l'entretoise 40.

Le dispositif 66 est monté coulissant sur le segment 14. Par exemple, le dispositif 66 peut comporter des lumières oblongues 70 et 72 dans des directions générales non parallèles, et des plots 74 et 76 peuvent être solidaires de l'âme du segment 14 et pénétrer dans les lumières 70 et 72.

Enfin, les extrémités d'un ressort de traction 36 sont accrochées respectivement sur l'âme du segment tendu 14 et sur la pièce terminale 40b, de façon à assurer un contact permanent entre le fond de l'échancrure 68 formée à l'extrémité du dispositif 66 et le fond de l'échancrure correspondante formée dans la pièce terminale 40b. De façon comparable, la pièce terminale 40a est sollicitée vers l'âme du segment 12 par un ressort de traction 38 dont les extrémités prennent appui respectivement sur l'âme du segment 12 et sur la pièce terminale 40a.

Le frein qui vient d'être décrit fonctionne de la façon suivante :

Au repos, les différents éléments du frein occupent les positions représentées sur la Figure 1.

Lors d'une mise en oeuvre hydraulique du frein, la mise sous pression du cylindre de roue 22 sollicite les segments 12 et 14 contre les surfaces du bloc d'appui 28, amenant ainsi les garnitures de friction 16 et 18 en contact de friction avec le tambour 20. Si un rattrapage de l'usure des garnitures de friction est nécessaire lors de cette mise en oeuvre, l'entretoise 40 s'allonge automatiquement, ses pièces terminales 40a et 40b restant au contact des âmes 12a et 14a respectivement, l'écartement des extrémités des segments 12 et 14 devenant ainsi plus important au repos qu'avant la mise en oeuvre du moteur de frein 22.

Lors d'une mise en oeuvre mécanique du frein, le levier d'actionnement 58 est sollicité vers la gauche en considérant la Figure 1, dans le sens de la flèche F, de telle sorte que les biellettes 52 et 62 écartent l'un de l'autre les pivots 54 et 64. La biellette 52 applique une force sur le segment 12 tendent à appliquer celui-ci sur le tambour 20, tandis que la biellette 62 applique une force sur le dispositif 66 tendant à faire coulisser celui-ci sur le segment 14. Un tel coulissement a pour résultat d'appliquer aux plots 74 et 76 une force radiale tendant à appliquer le segment 14 sur le tambour 20, tandis que l'extrémité 66b du dispositif 66 exerce une force sur la partie terminale 40b de l'entretoise 40, retransmise par la partie terminale 40a à l'âme 12a du segment 12.

On voit donc bien qu'on a réalisé un frein à tambour présentant les avantages d'un frein à segments flottants lors d'une mise en oeuvre hydraulique et les avantages d'un frein duo-servo lors d'une mise en oeuvre mécanique pour un freinage de stationnement ou de secours. En effet, on obtient une grande stabilité du frein lors d'un actionnement hydraulique, et une grande efficacité lors d'un actionnement mécanique, utilisé par hypothèse pour des actions de freinage beaucoup moins fréquentes.

On a représenté aux Figures 3 et 4 des variantes de réalisation du dispositif d'actionnement mécanique du frein à tambour. Sur la Figure 3, un tel dispositif 90 comporte un premier secteur denté excentrique 92 monté pivotant en 54 sur l'âme 12a du segment 12, et un second secteur denté excentrique 94 monté pivotant en 64 sur le dispositif de transmission d'effort 66. Un levier d'actionnement 58 est solidaire d'un des secteurs dentés, par exemple le secteur 92. On comprend aisément que l'actionnement de ce levier 58 aura pour effet d'écarter l'un de l'autre les pivots 54 et 64, comme on l'a décrit plus haut, avec un fonctionnement identique.

Sur la Figure 4, le dispositif d'actionnement mécanique 80 comporte une came 82 solidaire d'un levier d'actionnement schématisé en 58. La came 82 comporte des surfaces en développante 84 et 86 symétriques, coopérant avec un premier galet 54' monté pivotant en 54 sur l'âme 12a du segment 12 et avec un second galet 64' monté pivotant en 64 sur le dispositif de transmission d'effort 66. Comme précédemment décrit, l'actionnement du levier 58 aura pour effet d'écarter l'un de l'autre les pivots 54 et 64.

D'autres avantages découlent de la conception particulière du frein à tambour selon l'invention. C'est ainsi que lorsque le véhicule ainsi équipé se trouve à l'arrêt à la suite d'une mise en oeuvre hydraulique, les âmes des segments 12 et 14 sont fermement sollicitées contre le bloc d'appui 28. La force exercée sur le levier d'actionnement ne sera alors pas utilisée pour séparer les segments 12 et 14 du bloc d'appui 28, mais pour amener les différents éléments du frein dans une configuration telle que, si on relâche la pression hydraulique dans le moteur de frein 22, les segments 12 et 14 conservent leur position d'engagement de friction avec le tambour 20.

De plus, l'actionneur mécanique 50 étant situé au voisinage de la pièce d'appui 28, dont les faces servent de référence à la position à cet endroit, des segments 12 et 14, dont les garnitures 16 et 18 ne subissent à cet endroit qu'une usure faible, la course d'actionnement du levier 58, et donc du câble de manoeuvre qui lui est accroché, restera sensiblement constante quelle que soit l'usure des garnitures de friction.

## Revendications

1. Frein à tambour comportant une plaque support (10) sur laquelle sont montés coulissants deux segments (12, 14) comportant chacun une âme (12a, 14a) et une jante (12b, 14b) dont la face en regard du tambour (20) reçoit une garniture de friction (16, 18) susceptible d'être amenée en engagement de friction contre le tambour (20) par un dispositif d'actionnement hydraulique (22), agissant sur une première extrémité des âmes (12a, 14a) des segments (12, 14), une entretoise (40) de longueur variable déterminant l'écartement des segments (12, 14) étant disposée au voisinage du dispositif d'actionnement hydraulique (22), une seconde extrémité des âmes des segments portant sur une pièce d'appui (28) solidaire de la plaque support (10), et un dispositif d'actionnement mécanique (50, 90, 80) agissant entre un (12) des segments et une première extrémité (66a) d'un dispositif de transmission de force (66) monté sur l'autre segment (14), une deuxième extrémité (66b) du dispositif de transmission de force (66) portant sur l'entretoise (40) de longueur variable, caractérisé en ce que le dispositif de transmission de force (66) est monté coulissant sur l'autre segment (14) et en ce que le dispositif d'actionnement mécanique (50, 90, 80) est disposé au voisinage de la pièce d'appui (28) entre les secondes extrémités des âmes (12a, 14a) des segments (12, 14).

2. Frein à tambour selon la revendication 1, caractérisé en ce que le dispositif de transmission de force (66) est monté coulissant sur l'âme d'un segment (14) grâce à des pions portés par l'une des pièces (14a, 66) et coulissant dans des lumières oblongues (70, 72) formées dans l'autre pièce (66, 14a).

3. Frein à tambour selon la revendication 1, caractérisé en ce que le dispositif d'actionnement mécanique (50) est un dispositif à biellettes, une première biellette (52) étant montée pivotante (54) sur l'âme (12a) d'un segment (12) et une seconde biellette (62) étant montée pivotante (64) sur le dispositif de transmission de force (66), les première et seconde biellettes (52, 62) étant montées pivotantes (56, 60) sur un levier d'actionnement (58).

4. Frein à tambour selon la revendication 1, caractérisé en ce que le dispositif d'actionnement mécanique (90) comporte un premier secteur denté excentrique (92) monté pivotant (54) sur l'âme (12a) d'un segment (12) et un second secteur denté excentrique (94) monté pivotante sur le dispositif de transmission de force (66), l'un des secteurs dentés excentrique (92) étant solidaire d'un levier d'actionnement (58).

5. Frein à tambour selon la revendication 1, caractérisé en ce que le dispositif d'actionnement mécanique (80) comporte une came (82) solidaire d'un levier d'actionnement (58), la came (82) comportant des surfaces en développante (84, 86) symétriques coopérant avec un premier galet (54') monté pivotant (54) sur l'âme (12a) d'un segment (12) et avec un second galet (64') monté pivotant (64) sur le dispositif de transmission de force (66).

## Patentansprüche

1. Trommelbremse mit einer Trägerplatte (10), an der verschiebbar zwei Backen (12, 14) angebracht sind, die jeweils einen Steg (12a, 14a) und einen Kranz (12b, 14b) aufweisen, dessen der Trommel (20) gegenüberliegende Seite einen Reibbelag (16, 18) aufnimmt, der mit der Trommel (20) in einen Reibungseingriff durch eine hydraulische Betätigungsvorrichtung (22) gebracht werden kann, die auf ein erstes Ende der Stege (12a, 14a) der Backen (12, 14) einwirkt, wobei ein Zwischenstück (40) von variabler Länge, das den Abstand der Backen (12, 14) bestimmt, in der Nähe der hydraulischen Betätigungsvorrichtung (22) angeordnet ist, wobei ein zweites Ende der Stege der Backen an einem fest mit der Trägerplatte (10) verbundenen Abstützteil (28) anliegt und wobei eine mechanische Betätigungsvorrichtung (50, 90, 80) zwischen einer (12) der Backen und einem ersten Ende (66a) einer Kraftübertragungsvorrichtung (66) wirkt, die an der anderen Backe (14) angebracht ist, wobei ein zweites Ende (66b) der Kraftübertragungsvorrichtung (66) an dem Zwischenstück (40) von variabler Länge anliegt, dadurch gekennzeichnet, daß die Kraftübertragungsvorrichtung (66) verschiebbar an der anderen Backe (14) angebracht ist und daß die mechanische Betätigungsvorrichtung (50, 90, 80) in der Nähe des Abstützteils (28) zwischen den zweiten Enden der Stege (12a, 14a) der Backen (12, 14) angeordnet ist.

2. Trommelbremse nach Anspruch 1, dadurch gekennzeichnet, daß die Kraftübertragungsvorrichtung (66) verschiebbar an dem Steg einer Backe (14) durch Gleitsteine verschiebbar angebracht ist, die von einem der Teile (14a, 66) getragen werden und in länglichen Öffnungen (70, 72) gleiten, die in dem anderen Teil (66, 14a) gebildet sind.

3. Trommelbremse nach Anspruch 1, dadurch gekennzeichnet, daß die mechanische Betätigungsvorrichtung (50) eine Vorrichtung mit Schwingarmen ist, wobei ein erster Schwingarm (52) schwenkbar (54) an dem Steg (12a) einer Backe (12) angebracht ist und ein zweiter Schwingarm (62) schwenkbar (64) an der Kraftübertragungsvorrichtung (66) angebracht ist, wobei der erste und der zweite Schwingarm (52, 62) schwenkbar (56, 60) an einem Betätigungshebel (58) angebracht sind.

4. Trommelbremse nach Anspruch 1, dadurch gekennzeichnet, daß die mechanische Betätigungsvorrichtung (90) einen ersten exzentrischen Zahnbogen (92) aufweist, der schwenkbar (54) an dem Steg (12a) einer Backe (12) angebracht ist, und einen zweiten exzentrischen Zahnbogen (94), der schwenkbar an der Kraftübertragungsvorrichtung (66) angebracht ist, wobei einer der exzentrischen Zahnbögen (92) fest mit einem Betätigungshebel (58) verbunden ist.

5. Trommelbremse nach Anspruch 1, dadurch gekennzeichnet, daß die mechanische Betätigungsvorrichtung ein Kurventeil (82) aufweist, das fest mit einem Betätigungshebel (58) verbunden ist, wobei das Kurventeil (82) symmetrische Evolventenflächen (84, 86) aufweist, die mit einer ersten Rolle (54') zusammenwirken, die drehbar (54) an dem Steg (12a) einer Backe (12) angebracht ist, und mit einer zweiten Rolle (64'), die drehbar (64) an der Kraftübertragungsvorrichtung (66) angebracht ist.

## Claims

1. Drum brake comprising a support plate (10) on which there are slideably mounted two shoes (12, 14) each comprising a web (12a, 14a) and a rim (12b, 14b) whose face opposite the drum (20) receives a friction lining (16, 18) capable of being brought into frictional engagement against the drum (20) by a hydraulic actuation device (22), acting on a first end of the webs (12a, 14a) of the shoes (12, 14), a spacer (40) of variable length determining the spacing of the shoes (12, 14) being arranged in the vicinity of the hydraulic actuation device (22), a second end of the webs of the shoes bearing on a bearing component (28) securely fastened to the support plate (10) and a mechanical actuation device (50, 70, 80) acting between one (12) of the shoes and a first end (66a) of a force transmission device (66) mounted on the other shoe (14), a second end (66b) of variable length characterized in that the force transmission device (66) is slideably mounted on the other shoe (14) and in that the mechanical actuation device (50,90,80) is arranged near the bearing component (28) between the second ends of the webs (12a, 14a) of the shoes (12,14).

2. Drum brake according to Claim 1, characterized in that the force transmission device (66) is mounted slideably on the web of a shoe (14) by virtue of pins carried by one of the components (14a, 66) and sliding in oblong slits (70,72) formed in the other component (66, 14a).

3. Drum brake according to Claim 1, characterized in that the mechanical actuation device (50) is a device with link rods, a first link rod (52) being mounted pivotably (54) on the web (12a) of a shoe (12) and a second link rod (62) being mounted pivotably (64) on the force transmission device (66), the first and second link rods (52, 62) being mounted pivotably (56, 60) on an actuating lever (58).

4. Drum brake according to Claim 1, characterized in that the mechanical actuation device (90), comprises a first eccentric toothed sector (92) mounted pivotably (54) on the web (12a) of a shoe (12) and a second eccentric toothed sector (94) mounted pivotably on the force transmission device (66), one of the eccentric toothed sectors (92) being securely fastened to an actuating lever (58).

5. Drum brake according to Claim 1, characterized in that the mechanical actuation device (80) comprises a cam (82) securely fastened to an actuating lever (58), the cam (82) comprising symmetrical involute surfaces (84, 86) interacting with a first roller (54') mounted pivotably (54) on the web (12a) of a shoe (12) and with a second roller (64') mounted pivotably (64) on the force transmission device (66).
